# EUROPEAN PATENT APPLICATION

(11) **EP 4 723 464 A1**
(43) Date of publication of application: **08.04.2026**
(21) Application number: 24814972.6
(22) Date of filing: 03.04.2024
(51) Int. Cl.: H02M 7/48, B64D 27/24, H02P 27/06

(54) **INVERTER CONTROL DEVICE AND CONTROL METHOD**

(30) Priority: 02.06.2023 JP 2023091775
(71) Applicant: Hitachi, Ltd., Tokyo 100-8280 (JP)
(72) Inventor: OHNO, Yuuki, Tokyo 100-8280 (JP); KAWASHIMA, Tetsuya, Tokyo 100-8280 (JP)
(74) Representative: MERH-IP Matias Erny Reichl Hoffmann Patentanwälte PartG mbB
(86) International application number: PCT/JP2024/013845
(87) International publication number: WO 2024/247485

(57) **Abstract**

Provided is an inverter control device that makes it possible to improve the cosmic ray resistance of an inverter without increasing cost and system weight. An inverter control device 600 comprises: a voltage application total time determination unit 602 for determining a total voltage application time of each of a plurality of inverters 201, 202, 207, and 208; an operation pattern determination unit 603 for receiving as an input operation information of a flight vehicle 501, determining an operation pattern of the flight vehicle 501, and outputting the operation pattern to the voltage application total time determination unit 602; an inverter control unit 604 for controlling the plurality of inverters 201, 202, 207, 208 according to a command of the voltage total time determination unit 602, and electric current information and voltage information of the plurality of inverters 201, 202, 207, 208; and a switching control unit 605 for controlling the connection and opening of the plurality of inverters 201, 202, 207, 208 and an electric power supply 300 of the plurality of inverters 201, 202, 207, 208, according to information of the inverter control unit 604.

## Description

### Technical Field

The present invention relates to an inverter control device and a control method.

### Background Art

In recent years, aircraft such as passenger aircraft and vertical take-off and landing aircraft (VTOL aircraft) have been increasingly electrified. For example, the electrified aircraft include electric vertical take-off and landing aircraft (eVTOL aircraft).

In order to electrify a propulsion system constituting aircraft, it is necessary to increase the capacity and reliability of electric components including a motor, an inverter, and the like. As an electric system that realizes both large capacity and high reliability, there has been known an open-end winding system that can be efficiently driven by doubling the voltages applied to the motor windings using two inverters.

In order to operate the open-end winding system more efficiently, for example, PTL 1 discloses "a motor drive system capable of preventing a decrease in efficiency during low output", and describes that "during low output, operation with one inverter is desirable to suppress the loss of the inverter".

As described above, under the load condition in which the motor is driven at an output lower than the rated output, the motor is driven by only one of the two inverters to achieve high efficiency.

### Citation List

### Patent Literature

PTL 1: JP 2019-62726 A

### Summary of Invention

### Technical Problem

In the high altitude environment where aircraft fly, the cosmic ray intensity increases significantly. This significantly increases the probability that accidental failures occur in the inverters including semiconductor switching elements, gate drive circuits, and the like, which reduces reliability. In particular, the reliability of the inverters significantly decreases during cruising when the aircraft is flying at high altitude. In order to increase the reliability of the inverters, it is necessary to improve cosmic ray tolerance, and as a means therefor, it is effective to reduce the voltages applied to the semiconductor switching elements.

The configuration as described in PTL 1 is effective in increasing the efficiency of the inverters, but measures against cosmic rays are required because the DC voltage is continuously applied to the semiconductor switching elements of the two inverters, which decreases the cosmic ray tolerance of the inverters.

In order to improve the cosmic ray tolerance of the open-end winding system, it may be considered as a means therefor to improve the withstand voltages of the semiconductor switching elements, to serialize the semiconductor switching elements, to employ multi-stage inverters, to make the DC voltage variable by installing a step-up/down converter between the battery and the inverter, or the like, but adding a large number of semiconductor switching elements increases cost and increases system weight.

An object of the present invention is to provide an inverter control device and a control method that make it possible to improve the cosmic ray tolerance of inverters without increasing cost and system weight.

### Solution to Problem

In order to achieve the aforementioned object, the present invention is configured as follows.

An inverter control device includes: a voltage application total time determination unit that determines a total voltage application time for each of a plurality of inverters; an operation pattern determination unit that receives operation information of a flight vehicle, determines an operation pattern of the flight vehicle, and outputs the determined operation pattern to the voltage application total time determination unit; an inverter control unit that controls the plurality of inverters according to a command from the voltage application total time determination unit and current information and voltage information of the plurality of inverters; and a switching control unit that controls connection and disconnection between power sources of the plurality of inverters and the plurality of inverters according to information from the inverter control unit.

Further, an inverter control method includes: determining a total voltage application time for each of a plurality of inverters; determining an operation pattern of a flight vehicle from operation information of the flight vehicle; controlling the plurality of inverters according to current information and voltage information of the plurality of inverters; and controlling connection and disconnection between power sources of the plurality of inverters and the plurality of inverters.

### Advantageous Effects of Invention

According to the present invention, it is possible to provide an inverter control device and a control method that make it possible to improve the cosmic ray tolerance of inverters without increasing cost and system weight.

By reducing the total times of the voltage application to the semiconductor switching elements while driving the motor and inverters constituting the propulsion system of the flight vehicle with high efficiency, the cosmic ray tolerance of the inverters is improved, thereby realizing the high reliability of the aircraft and increasing the number of flights or the cruising distance.

In addition, it is not required to add a semiconductor switching element and a capacitor discharge circuit, thereby reducing cost and weight.

### Brief Description of Drawings

[FIG. 1] FIG. 1 is a schematic configuration diagram illustrating a configuration of a propulsion system of a flight vehicle controlled by an inverter control device according to a first embodiment.
[FIG. 2] FIG. 2 is a functional block diagram of the inverter control device according to the first embodiment.
[FIG. 3] FIG. 3 is a diagram illustrating an operation pattern of a flight vehicle.
[FIG. 4] FIG. 4 is a flowchart for explaining a control algorithm according to the first embodiment.
[FIG. 5A] FIG. 5A is a diagram illustrating an operation pattern in a forward path according to the first embodiment.
[FIG. 5B] FIG. 5B is a diagram illustrating an operation pattern in a backward path according to the first embodiment.
[FIG. 6] FIG. 6 is a schematic configuration diagram illustrating a configuration of a propulsion system of a flight vehicle controlled by an inverter control device according to a second embodiment.
[FIG. 7] FIG. 7 is a schematic configuration diagram illustrating a configuration of a propulsion system of a flight vehicle controlled by an inverter control device according to a third embodiment.
[FIG. 8A] FIG. 8A is a diagram illustrating an operation pattern according to a fourth embodiment.
[FIG. 8B] FIG. 8B is a diagram illustrating an operation pattern according to the fourth embodiment.
[FIG. 9] FIG. 9 is a diagram illustrating an operation pattern according to a fifth embodiment.

### Description of Embodiments

Hereinafter, an inverter control device according to the present invention will be described with reference to the drawings. In addition, in embodiments other than the first embodiment of the present invention, the same parts as those in the first embodiment will be denoted by the same reference signs and the description thereof will be omitted, and only different parts will be described.

### Embodiments

### (First Embodiment)

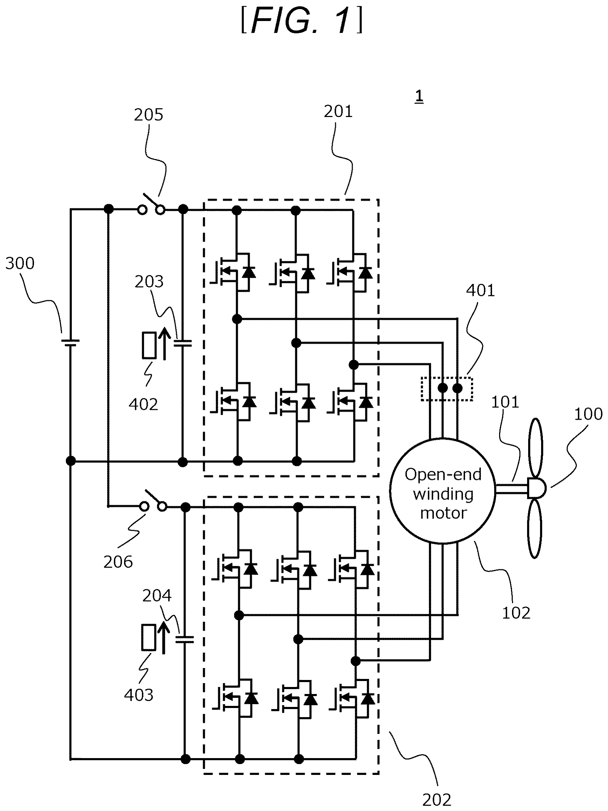

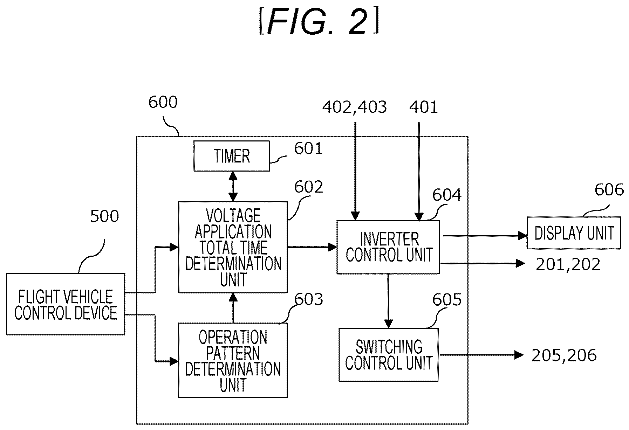

FIG. 1 is a configuration diagram of a propulsion system 1 for each propeller according to the first embodiment. FIG. 2 is a functional block diagram of an inverter control device 600.

In FIG. 1, a propeller 100 is connected to an open-end winding motor 102 that is a three-phase motor via a shaft 101. The three-phase windings of the open-end winding motor 102 are not connected independently of each other, and an inverter A 201 and an inverter B 202 independent of each other are connected to both ends of the windings. The three-phase motor 102 in the first embodiment is assumed to be a permanent magnet synchronous motor, but for example, an induction machine or the like may be used.

The inverter A 201 and the inverter B 202 are configured by connecting semiconductor switching elements in a three-phase bridge manner, and a smoothing capacitor A 203 and a smoothing capacitor B 204 independent of each other are provided in DC sections thereof. A battery A 300 (power source) is connected in parallel to both the inverter A 201 and the inverter B 202. In the first embodiment, although the battery is assumed, for example, a DC-DC converter may be connected, or an AC voltage source may be converted into DC power using an AC-DC converter.

A switch A 205 is connected between the battery A 300 and the capacitor A203, and a switch B 206 is connected between the battery A 300 and the capacitor B204. The switch A 205 and the switch B 206 may be mechanical switches such as relays, or may be semiconductor switching elements.

A current sensor 401 detects three-phase currents flowing through the open-end winding motor 102, and a voltage sensor A 402 and a voltage sensor B 403 detect voltages of the smoothing capacitors 203 and 204 connected to the inverters 201 and 202, respectively. The current sensor 401 may detect three phases of the motor current.

The inverter control device 600 generates switching signals of the inverter A 201 and the inverter B 202, the switch A 205, and the switch B 206 based on operation information and voltage application time information from a flight vehicle control device 500, which is a higher-level command device, detection values of the current sensor 401, and detection values of the voltage sensors A and B 402 and 403.

FIG. 2 is a functional block diagram of the inverter control device according to the first embodiment.

In FIG. 2, the inverter control device 600 includes a timer 601, a voltage application total time determination unit 602, an operation pattern determination unit 603, an inverter control unit 604, and a switching control unit 605.

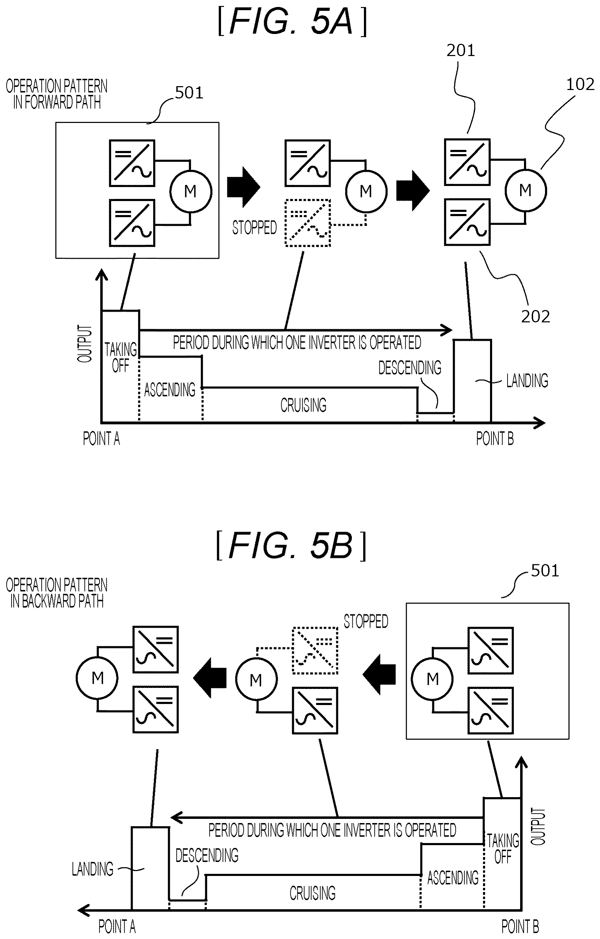

The voltage application total time determination unit 602 receives information on voltage application to the semiconductor from the flight vehicle control device 500 of the flight vehicle 501 (illustrated in FIG. 5A) in the propulsion system 1 (voltage information of the battery A 300, voltage information from the voltage sensor A 402, or voltage information from the voltage sensor B 403), drives the timer 601, and determines a total voltage application time for each of the plurality of inverters (the two inverters 201 and 202 in the first embodiment).

The operation pattern determination unit 603 receives operation information of the flight vehicle 501 from the flight vehicle control device 500, determines an operation pattern of the flight vehicle, and outputs the determined operation pattern information to the voltage application total time determination unit 602.

The inverter control unit 604 controls the inverters 201 and 202 according to a command (a command indicating which one of the output powers of the inverters 201 and 202 is to be controlled) from the voltage total time determination unit 602, current information from the current sensor 401, voltage information from the voltage sensor A 402, and voltage information from the voltage sensor B 403. That is, based on the total voltage application time for each of the plurality of inverters A and B 201 and 202 during cruising of the flight vehicle 501, the inverter control unit 604 selects one of the inverters and B 201 and 202, controls the modulation factor of the selected inverter or B 201 or 202, and controls the voltage of the smoothing capacitor A or B 203 or 204.

The switching control unit 605 controls the operation of the switch A 205 or the switch B 206 according to information from the inverter control unit 604 (information indicating which of the inverters 201 and 202 is to be controlled) to control connection and disconnection between the battery 300, which is a power source of the inverters 201 and 202, and the inverters 201 and 202.

The display unit 606 displays a driving state for each of the inverter 201 and the inverter 202 (a state indicating whether it is being driven or stopped) based on information from the inverter control unit 604.

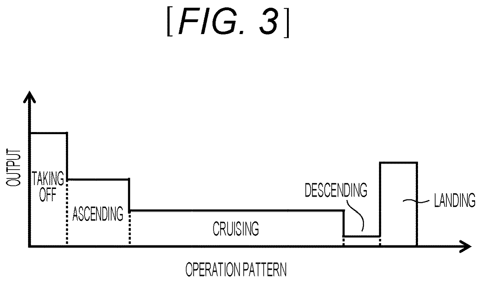

Next, an operation pattern of a flight vehicle is illustrated in FIG. 3. In aircraft, which is a flight vehicle, the open-end winding motor 102 transmits a rotational force via the shaft 101 in order for the propeller 100 to generate thrust. In order to drive the open-end winding motor 102, the output voltages of the inverter A 201 and the inverter B 202 are applied to the windings of the open-end winding motor 102.

At this time, for example, by applying the output voltage of the inverter B 202 to the winding of the open-end winding motor 102 in an opposite phase to the output voltage of the inverter A 201, the voltage amplitude for each motor winding phase is increased without increasing the withstand voltages of the semiconductor switching elements and without providing a step-up circuit, thereby achieving a high output of the open-end winding motor 102 with high efficiency.

When the aircraft is taking off or landing, it is necessary to drive the open-end winding motor 102 at a higher output than in other operation patterns. In this case, the open-end winding motor 102 is driven at a high output and with high efficiency by using both the inverter A 201 and the inverter B 202.

On the other hand, when the aircraft is cruising, the open-end winding motor 102 is driven at a lower output than when the aircraft is taking off or landing. When the motor is driven at the low output, the voltage required for driving the motor also decreases, and thus, the inverter A 201 or the inverter B 202 is stopped to perform high-efficiency operation in all operation patterns.

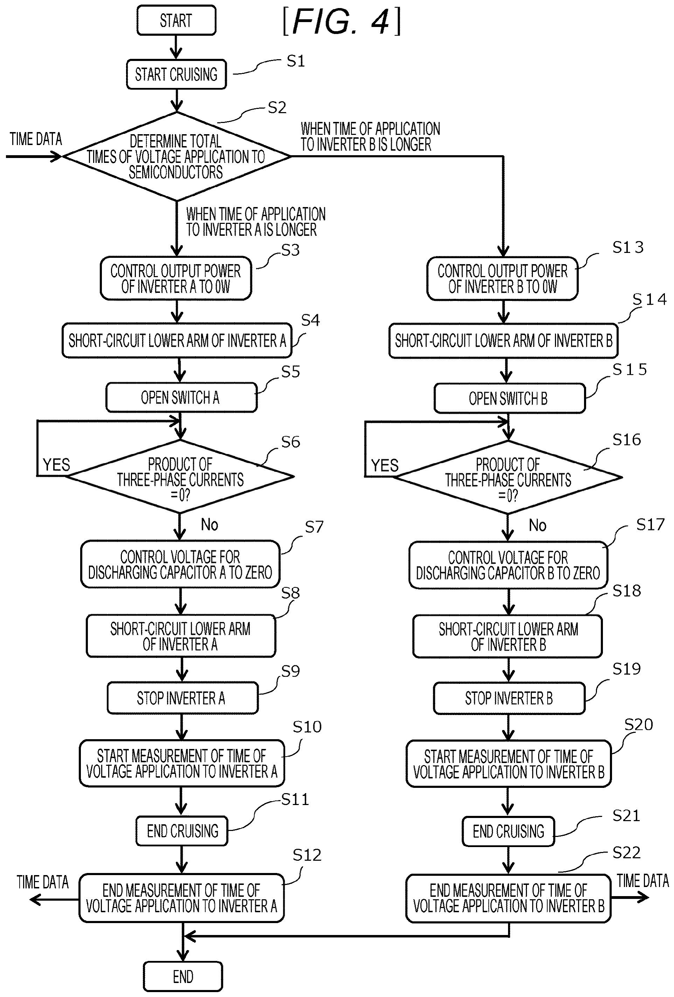

FIG. 4 is a flowchart of a control algorithm according to the first embodiment. When a pilot or an operation system (e.g., an altimeter or the like) determines that the operation phase has changed from taking off to cruising, either the inverter A 201 or the inverter B 202 is stopped, and the open-end winding motor 102 is driven from an open-end winding state to a Y-connected state.

Here, for example, it is effective from the viewpoint of efficiency to stop the inverter A 201 or the inverter B 202 every time of cruise and drive the open-end winding motor 102 from the open-end winding state to the Y-connected state during low output, but is not desirable because the usage times of the two inverters A and B 201 and 202 are different, which increases the probability that an accidental failure occurs due to cosmic rays only in one of the two inverters that has been used for a longer time.

In addition, even when the inverter A 201 or the inverter B 202 is stopped and the output thereof becomes zero, if the voltage of the battery A 300 is continuously applied thereto, the inverter continues to be affected by cosmic rays even though the inverter is stopped.

Therefore, in the first embodiment, the influences of the cosmic rays on the two inverters A and B 201 and 202 are equalized, and then control is performed to reduce the influence of the cosmic rays when the inverter is stopped. Hereinafter, a control method according to the first embodiment will be described.

Immediately after cruising is started in step S1, the open-end winding motor 102 is driven by the two inverters 201 and 202. At this time, for example, assuming that the motor output required for taking off is 100 kW, the motor output is 50 kW during cruising because the output required for cruising is about half the motor output required for taking off, and the output of each inverter is 25 kW.

When cruising is started, in step S2, the total time of voltage application to the semiconductor switching element for each of the two inverters 201 and 202 is determined, one of the two inverters to be stopped is selected, and the times for which the two inverters 201 and 202 are affected by cosmic rays are equalized. The stopping of the inverter 201 or 202 means that the output of the inverter becomes zero, so the inverter control unit 604 needs to set the modulation factor of the inverter 201 or the inverter 202 to be stopped to zero. For the voltage shortage caused by setting the modulation factor of the inverter to be stopped to zero, the inverter control unit 604 increases the modulation factor of the inverter to be continuously driven, thereby continuing to supply desired power to the open-end winding motor 102.

At this time, for example, assuming that the motor output required for taking off is 100 kW, the motor output during cruising is 50 kW, and the continuously driven inverter outputs 50 kW, while the stopped inverter outputs 0 kW. After the modulation factor of the inverter to be stopped is set to zero in step S3 or step S13, the lower arm of the stopped inverter is short-circuited in step S4 or S14, so that a path for a current flowing between the battery A 300 and the open-end winding motor 102 via the inverter 201 or 202 is eliminated to prevent the smoothing capacitor 203 or 204 from being unintentionally charged. In step S5 or S15, after the lower arm of the inverter 201 or 202 to be stopped is short-circuited, the switching control unit 605 opens the switch 205 or 206 on the stopped inverter 201 or 202 side.

Before opening the switch 205 or 206 connected to the battery A 300 and the smoothing capacitor 203 or 204, the inverter control unit 604 decreases the modulation factor of the inverter 201 or 202 to be stopped to zero, increases the modulation factor of the inverter 201 or 202 to be driven to a voltage required by the open-end winding motor 102, sets the output of the inverter 201 or 202 to be stopped to zero, and then short-circuits the lower arm of the inverter 201 or 202 to be stopped. As a result, the smoothing capacitor 203 or 204 can be prevented from being unintentionally charged.

Even if the stopped inverter 201 or 202 is opened from the battery A 300 by the switch 205 or 206, the voltage of the smoothing capacitor 203 or 204 is approximately equal to the DC voltage due to the influence of the electric charge stored in the smoothing capacitor 203 or 204, so that the voltage is continuously applied to the semiconductor switching element of the stopped inverter 201 or 202, causing an accidental failure due to cosmic rays.

Therefore, it is necessary to discharge the electric charge stored in the smoothing capacitor 203 or 204 to set the capacitor voltage to 0 V. The discharge current is consumed by the winding resistance of the open-end winding motor 102 via the stopped inverter 201 or 202. At this time, when the discharge current flows from the smoothing capacitor 203 or 204 to the open-end winding motor 102 at a timing when the motor current becomes 0 A, the discharge current leads to waveform distortion because it is a current that should not flow, causing current vibration or unintended regeneration.

Therefore, in step S6 or S16, the inverter control unit 604 determines whether the three-phase currents detected by the current sensor 401 are 0, and discharges the smoothing capacitor 203 or 204 when it is necessary to perform discharge during a period in which the three-phase currents are not 0 A, that is, when the product of the three-phase currents is not 0 A. The lower limit current may be set to a certain threshold instead of 0 A, and the discharge may be started when the product of the motor currents is larger than that current value.

In the discharge of the smoothing capacitor 203 or 204 in step S7 or S17, the inverter control unit 604 detects the voltage of the smoothing capacitor 203 or 204 in real time using the voltage sensor A or B 402 or 403, and decreases the voltage of the smoothing capacitor 203 or 204 to 0 V. At this time, the stopped inverter generates a switching signal to ensure a current path for discharging the smoothing capacitor 203 or 204 and to drive the smoothing capacitor 203 or 204 in a Y-connected state. The capacitor voltage may be predicted from the switching pattern in a sensorless manner without providing a voltage detection sensor.

After the smoothing capacitor 203 or 204 connected to the stopped inverter is discharged, the inverter control unit 604 short-circuits the lower arm of the stopped inverter 201 or 202 again in step S8 or S18, thereby eliminating a capacitor path for a current flowing from the open-end winding motor 102 via the inverter 201 or 202, preventing the smoothing capacitor from being unintentionally charged, and maintaining the capacitor voltage at 0 V. As a result, the cosmic ray tolerance of the inverter to be stopped is improved.

After the inverter is stopped in step S9 or S19, a time of stop of the inverter 201 or 202 or a total time of voltage application to the continuously driven inverter is measured in steps S10 and S11 or in steps S20 and S21 until cruising ends. When cruising ends, in step S12 or S22, the total voltage application time data is used for determining an inverter to be stopped during next cruising (step S2).

FIGS. 5A and 5B illustrate operation patterns in a case where the first embodiment is used. FIG. 5A illustrates an operation pattern in a forward path, and FIG. 5B illustrates an operation pattern in a backward path.

In FIGS. 5A and 5B, when the flight vehicle 501 moves from point A to point B and moves from point B to point A, the open-end winding motor 102 is driven by two inverters during taking off. One of the inverters 201 and 202 is stopped by the inverter control device 400 during ascending, and the open-end winding motor 102 is driven by one inverter from during cruising to during descending.

During landing, the stopped inverter 201 or 202 is restarted in the reverse order of the order illustrated in FIG. 3, and the open-end winding motor 102 is driven by the two inverters 201 and 202.

As a result, the cosmic ray tolerance of the inverter when flying at a high altitude is improved while driving the motor with high efficiency according to the motor output.

As described above, the inverter control device 400 according to the first embodiment of the present invention, in which the three-phase motor 102 open-wound via the shaft 101 is connected to the propeller 100 that generates thrust, controls the two inverters 201 and 202 independently and separately connected to the three-phase motor 102, the smoothing capacitors 203 and 204 separately connected to the DC sections of the inverters 201 and 202, the switches 205 and 206 connected between the smoothing capacitors 203 and 204 and the battery 300, and both the semiconductor switching elements and the switches 205 and 206 constituting the inverters 201 and 202.

The inverter control device 600 according to the first embodiment drives the open-end winding motor 102 with only one of the two inverters 201 and 202 during cruising, focusing on the fact that the output of the open-end winding motor 102 during cruising is about half the motor output during vertical taking off and landing. At this time, the inverter 201 or 202 having a longer total voltage application time among the two inverters is stopped so that the total times of voltage application to the semiconductor switching elements of the two inverters 201 and 202 becomes equal during cruising.

In order to stop the inverter 201 or 202, before opening the switch 205 or 206 connected between the smoothing capacitor 203 or 204 and the battery A 300, the modulation factor of the inverter 201 or 202 to be stopped is controlled to decrease to zero, and the modulation factor of the inverter 201 or 202 to be continuously driven is controlled to increase by the necessary amount, so that the output of the stopped inverter 201 or 202 is set to zero while continuing to drive the open-end winding motor 102 as desired.

As a result, the surge is minimized when the switch 205 or 206 on the stopped inverter 201 or 202 side is opened. Thereafter, the lower arm of the stopped inverter 201 or 202 is short-circuited to eliminate a path for a current flowing via the inverter 202 or 202 between the battery 300 and the open-end winding motor 102, and open the switch 205 or 206 on the stopped inverter 201 or 202 side.

After the switch 205 or 206 on the stopped inverter 201 or 202 side is opened, the capacitor voltage is equal to the DC voltage due to the electric charge stored in the capacitor 203 or 204. Therefore, the stopped inverter 201 or 202 is controlled to discharge the electric charge stored in the capacitor 203 or 204. The discharge current is consumed by the motor winding resistance during a period in which the three-phase currents flowing through the open-end winding motor 102 are not 0 A, and the voltage of the smoothing capacitor 203 or 204 on the stopped inverter 201 or 202 side is controlled to 0 V. Thereafter, by short-circuiting the lower arm of the stopped inverter 201 or 202 again, a capacitor path for a current flowing from the open-end winding motor 102 via the inverter 201 or 202 is eliminated, and the voltage of the capacitor 203 or 204 is maintained at 0 V.

As a result, the time of voltage application to the semiconductor switching element for each inverter 201 or 202 is reduced by half.

According to the first embodiment, it is possible to provide an inverter control device and a control method that make it possible to improve the cosmic ray tolerance of inverters without increasing cost and system weight.

### (Second Embodiment)

Next, the second embodiment of the present invention will be described.

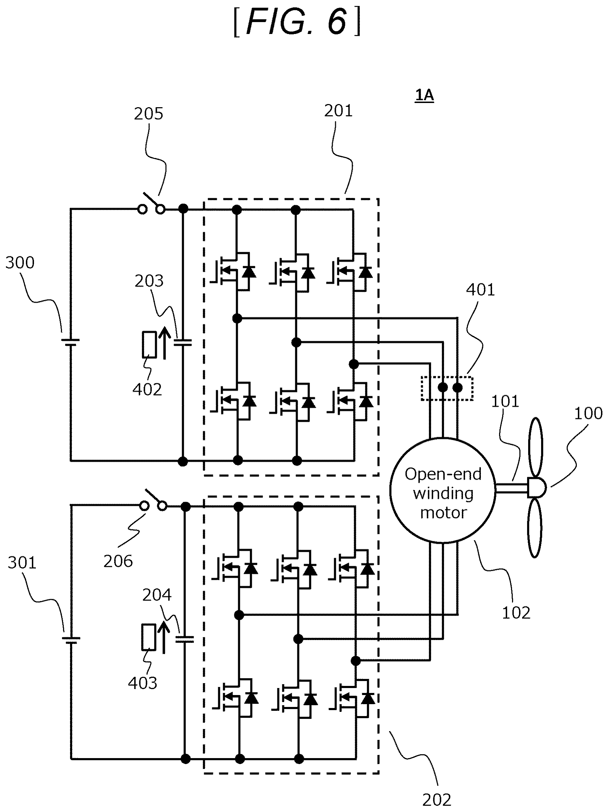

FIG. 6 is a schematic configuration diagram illustrating a configuration of a propulsion system 1A of a flight vehicle controlled by the inverter control device 600 according to the second embodiment.

In the propulsion system 1A controlled by the inverter control device 600 according to the second embodiment, the inverter A 201 and the inverter B 202 are connected to separate and independent batteries A and B 300 and 301 (power sources). In aviation applications, a configuration as in the second embodiment may be desirable for battery redundancy.

The configuration and operation of the inverter control device 600 according to the second embodiment are similar to those illustrated in FIG. 2, and thus the description thereof will be omitted.

In the second embodiment, the same effects as those in the first embodiment can be obtained.

### (Third Embodiment)

Next, the third embodiment of the present invention will be described.

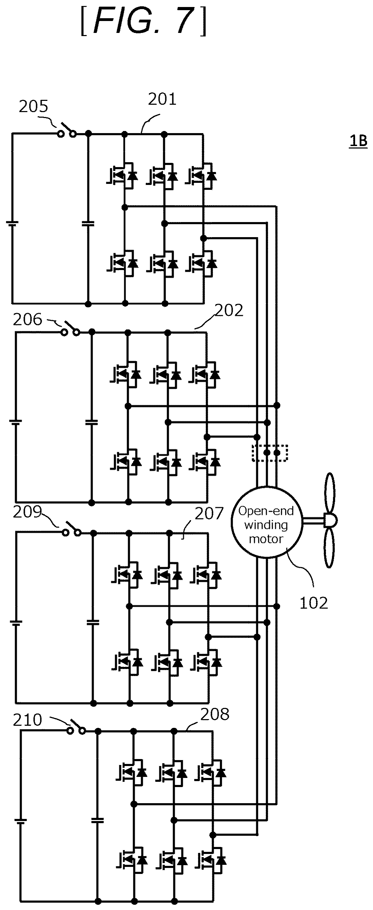

FIG. 7 is a schematic configuration diagram illustrating a configuration of a propulsion system 1B of a flight vehicle controlled by the inverter control device 600 according to the third embodiment.

In the propulsion system 1B controlled by the inverter control device 600 according to the third embodiment, a total of four inverters, inverter A 201, inverter B 202, inverter C 209, and inverter D 210, are connected to both ends of the three-phase windings of the open-end winding motor 102. The inverter C 209 and the inverter D 210 have configurations similar to those of the inverter A 201 and the inverter B 202. In the third embodiment, there may be four or more inverters.

The third embodiment is effective when measures against inverter failures are more important. The larger the number of inverters, the more the total voltage application time can be reduced. Independent batteries may be connected to the respective inverters, a common battery may be connected to the inverters, or one battery may be connected to two of the inverters grouped into one set.

The configuration and operation of the inverter control device 600 according to the third embodiment are similar to those illustrated in FIG. 2, and thus the description thereof will be omitted.

According to the third embodiment, the same effects as those of the first embodiment can be obtained, and the total time of voltage application to each inverter can be reduced, and the failure occurrence rate can be reduced.

### (Fourth Embodiment)

Next, the fourth embodiment of the present invention will be described.

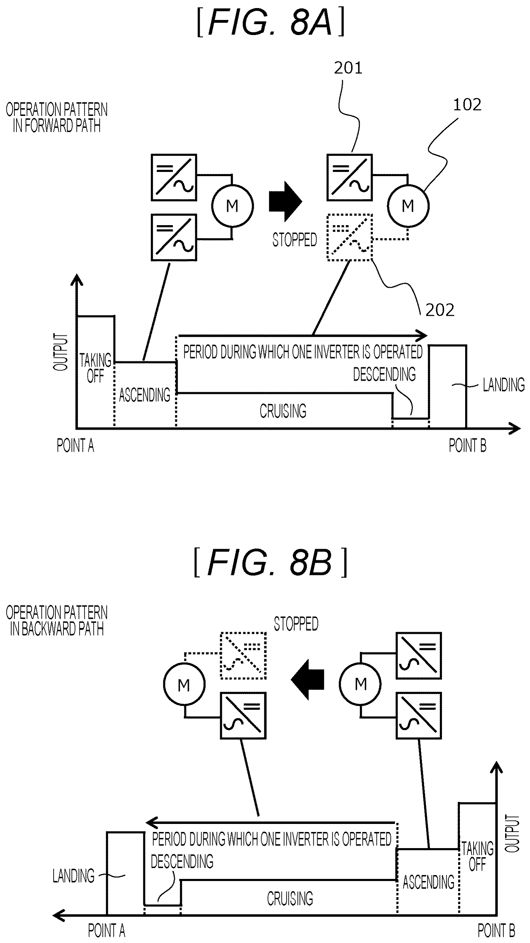

FIGS. 8A and 8B are diagrams illustrating operation patterns of a flight vehicle controlled by the inverter control device 600 according to the fourth embodiment.

In aircraft that is a flight vehicle using different propellers or motors during taking off and landing and during the other flight modes, the inverter control unit 604 drives the open-end winding motor 102 with the two inverters 201 and 202 during ascending, stops one inverter during cruising and descending, and drives the motor with high efficiency with one inverter. Among the plurality of inverters 201 and 202, the inverter control unit 604 drives the inverter 202 stopped in the forward path in the backward path, and stops the inverter 201 driven in the forward path in the backward path.

During taking off and landing, a propeller or a motor different from the propeller or the motor used during ascending, cruising, and descending is used.

The configuration and operation of the inverter control device 600 according to the fourth embodiment are similar to those illustrated in FIG. 2, and thus the description thereof will be omitted.

According to the fourth embodiment, for a flight vehicle using different propellers or motors during taking off and landing and in the other flight modes as well, the total time of voltage application to each inverter can be reduced and the failure occurrence rate can be reduced as in the first embodiment.

### (Fifth Embodiment)

Next, the fifth embodiment of the present invention will be described.

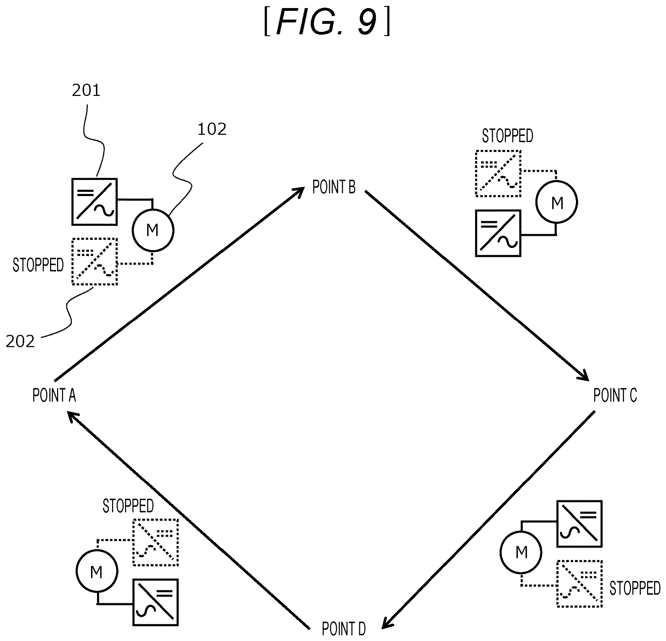

FIG. 9 is a diagram illustrating an operation pattern according to the fifth embodiment. In the operation pattern illustrated in FIG. 9, it is determined whether to stop the inverter based on the total voltage application time even when a flight vehicle passes through a plurality of destinations. For example, in a flight pattern for cruising through four points A, B, C, and D, the inverter B 202 is stopped from the point A to the point B, the inverter A 201 is stopped from the point B to the point C, the inverter B 202 is stopped from the point C to the point D, and the inverter A 201 is stopped from the point D to the point A.

That is, even in a case where a plurality of destinations are passed through, not in a forward path and a backward path, it is determined whether to stop the inverter based on the total voltage application time, and therefore the same effects as those of the first embodiment can be obtained.

Note that, in the fifth embodiment, the operation control according to any one of the first to fourth embodiments may be used.

### Reference Signs List

- 1, 1A, 1B: propulsion system for flight vehicle
- 100: propeller
- 101: shaft
- 102: open-end winding motor
- 201: inverter A
- 202: inverter B
- 203: smoothing capacitor A
- 204: smoothing capacitor B
- 205: switch A
- 206: switch B
- 207: inverter D
- 208: inverter E
- 209: switch C
- 210: switch D
- 300: battery A (power source)
- 301: battery B (power source)
- 401: current sensor
- 402: voltage sensor A
- 403: voltage sensor B
- 500: flight vehicle control device
- 501: flight vehicle
- 600: inverter control device
- 601: timer
- 602: voltage application total time determination unit
- 603: operation pattern determination unit
- 604: inverter control unit
- 605: switching control unit
- 606: display unit

## Claims

1. An inverter control device comprising:
a voltage application total time determination unit that determines a total voltage application time for each of a plurality of inverters;
an operation pattern determination unit that receives operation information of a flight vehicle, determines an operation pattern of the flight vehicle, and outputs the determined operation pattern to the voltage application total time determination unit;
an inverter control unit that controls voltages of the plurality of inverters and a plurality of smoothing capacitors according to a command from the voltage application total time determination unit and current information and voltage information of the plurality of inverters; and
a switching control unit that controls connection and disconnection between power sources of the plurality of inverters and the plurality of inverters according to information from the inverter control unit.

2. The inverter control device according to claim 1, wherein
the flight vehicle has an open-end winding motor connected to a propeller via a shaft, and has a larger output during taking off or landing or during ascending than during cruising, the open-end winding motor is connected to the plurality of inverters, and each of the plurality of inverters has a DC section connected to the smoothing capacitor and is connected to the power source via a switch,
the inverter control unit selects one of the plurality of inverters based on the total voltage application time during cruising for each of the plurality of inverters, and controls a modulation factor of the selected inverter, and
the switching control unit connects or disconnects the switch according to the information from the inverter control unit.

3. The inverter control device according to claim 2, wherein
the inverter control unit controls whether to stop or drive the plurality of inverters so that the open-end winding motor is driven by the plurality of inverters when the flight vehicle is taking off or landing or when the flight vehicle is ascending, and the total voltage application times of the plurality of inverters are equal when the flight vehicle is cruising.

4. The inverter control device according to claim 3, wherein
the inverter control unit stops an inverter having a longer total voltage application time and drives an inverter having a short total voltage application time such that the total voltage application times of the plurality of inverters are equal.

5. The inverter control device according to claim 4, wherein
the inverter control unit decreases a modulation factor of the inverter to be stopped to zero, increases a modulation factor of the inverter to be driven to a voltage required by the open-end winding motor, sets an output of the inverter to be stopped to zero, and then short-circuits a lower arm of the inverter to be stopped, and
the switching control unit opens the switch connected to the power source and the smoothing capacitor after the lower arm of the inverter to be stopped is short-circuited.

6. The inverter control device according to claim 5, wherein
when a product of three-phase currents flowing through the open-end winding motor is 0 A or larger than a certain threshold, the inverter control unit discharges an electric charge stored in the smoothing capacitor through a winding resistance of the open-end winding motor, and decreases the voltage of the smoothing capacitor to 0 V.

7. The inverter control device according to claim 6, wherein
after decreasing the voltage of the smoothing capacitor to 0 V, the inverter control unit short-circuits the lower arm of the inverter to be stopped to maintain the voltage of the smoothing capacitor at 0 V.

8. The inverter control device according to claim 7, wherein
among the plurality of inverters, the inverter control unit drives an inverter stopped in a forward path in a backward path, and stops an inverter driven in the forward path in the backward path.

9. The inverter control device according to claim 1, further comprising
a display unit that displays a state indicating whether each of the plurality of inverters is being driven or stopped based on the information from the inverter control unit.

10. An inverter control method comprising:
determining a total voltage application time for each of a plurality of inverters;
determining an operation pattern of a flight vehicle from operation information of the flight vehicle;
controlling the plurality of inverters according to current information and voltage information of the plurality of inverters; and
controlling connection and disconnection between power sources of the plurality of inverters and the plurality of inverters.

11. The inverter control method according to claim 10, wherein
the flight vehicle has an open-end winding motor connected to a propeller via a shaft, and has a larger output during taking off or landing or during ascending than during cruising, the open-end winding motor is connected to the plurality of inverters, and each of the plurality of inverters has a DC section connected to a smoothing capacitor and is connected to the power source via a switch,
one of the plurality of inverters is selected based on the total voltage application time during cruising for each of the plurality of inverters, and a modulation factor of the selected inverter is modulated, and
a voltage of the smoothing capacitor is decreased after the switch is opened.

12. The inverter control method according to claim 11, wherein
it is controlled whether to stop or drive the plurality of inverters so that the open-end winding motor is driven by the plurality of inverters when the flight vehicle is taking off or landing or when the flight vehicle is ascending, and the total voltage application times of the plurality of inverters are equal when the flight vehicle is cruising.

13. The inverter control method according to claim 12, wherein
an inverter having a longer total voltage application time is stopped and an inverter having a short total voltage application time is driven such that the total voltage application times of the plurality of inverters are equal.

14. The inverter control method according to claim 13, wherein
a modulation factor of the inverter to be stopped is decreased to zero, a modulation factor of the inverter to be driven is increased to a voltage required by the open-end winding motor, an output of the inverter to be stopped is set to zero, and then a lower arm of the inverter to be stopped is short-circuited, and the switch connected to the power source and the smoothing capacitor is opened after the lower arm of the inverter to be stopped is short-circuited.

15. The inverter control method according to claim 14, wherein
when a product of three-phase currents flowing through the open-end winding motor is 0 A or larger than a certain threshold, an electric charge stored in the smoothing capacitor is discharged through a winding resistance of the open-end winding motor, and the voltage of the smoothing capacitor is decreased to 0 V.
